# EUROPEAN PATENT APPLICATION

(11) **EP 4 825 605 A1**
(43) Date of publication of application: **21.10.2026**
(21) Application number: 24903178.2
(22) Date of filing: 11.06.2024
(51) Int. Cl.: B60C 7/00, B60C 19/00

(54) **NON-PNEUMATIC TIRE**

(30) Priority: 13.12.2023 JP 2023210562
(71) Applicant: BRIDGESTONE CORPORATION, Chuo-ku Tokyo 104-8340 (JP)
(72) Inventor: KAMADA Takehito, Tokyo 104-8340 (JP); SUKEGAWA Shin, Tokyo 104-8340 (JP); ITO Yujiro, Tokyo 104-8340 (JP); HOSHINO Hironori, Tokyo 104-8340 (JP)
(74) Representative: Marks & Clerk LLP
(86) International application number: PCT/JP2024/021213
(87) International publication number: WO 2025/126514

(57) **Abstract**

A non-pneumatic tire includes a wheel member attachable to an axle, a ring member mounted on the wheel member, and a communication device. The ring member includes an inner cylinder mounted on the wheel member, an outer cylinder surrounding the inner cylinder on a tire radial direction outer side, and a connecting member that connects the inner cylinder and the outer cylinder and is elastically deformable between the inner cylinder and the outer cylinder. The communication device is fixed on a surface exposed to the outside of the wheel member or the inner cylinder of the ring member.

## Description

### TECHNICAL FIELD

The present disclosure relates to a non-pneumatic tire.

### BACKGROUND

Patent Literature (PTL) 1 describes a non-pneumatic tire. The non-pneumatic tire disclosed in PTL 1 includes: an attachment body attachable to an axle; a ring member having an inner cylinder and an outer cylinder, the inner cylinder being externally mounted on the attachment body and the outer cylinder surrounding the inner cylinder from the tire radial direction outer side; and a connecting member, disposed in plural along the tire circumferential direction between the inner cylinder and the outer cylinder, that connects the two cylinders.

### CITATION LIST

### Patent Literature

PTL 1: JP 2018-193046 A

### SUMMARY

### (Technical Problem)

The inventors of the present disclosure have newly conceived of providing a communication device (for example, an RF tag or the like) in a non-pneumatic tire as described in PTL 1, and have newly discovered a configuration capable of suppressing damage to the communication device in a non-pneumatic tire during running of a vehicle equipped with the non-pneumatic tire (hereinafter, simply referred to as "during vehicle running"), thereby arriving at the present disclosure.

An object of the present disclosure is to provide a non-pneumatic tire capable of suppressing damage to a communication device during vehicle running.

### (Solution to Problem)

A non-pneumatic tire according to a first aspect of the present disclosure comprises:
(1)
   a wheel member attachable to an axle;
   a ring member mounted on the wheel member; and
   a communication device,
   wherein the ring member comprises:
      an inner cylinder mounted on the wheel member;
      an outer cylinder surrounding the inner cylinder on a tire radial direction outer side; and
      a connecting member that connects the inner cylinder and the outer cylinder and is elastically deformable between the inner cylinder and the outer cylinder,
   and the communication device is fixed on a surface exposed to the outside of the wheel member or the inner cylinder of the ring member.
In one embodiment of the present disclosure, (2)
   the communication device has an elongated shape, and
   the communication device is fixed on the surface of the wheel member or the inner cylinder of the ring member such that a longitudinal direction thereof is along a tire width direction,
   in the non-pneumatic tire according to (1) above.
In one embodiment of the present disclosure, (3)
   the communication device is fixed on an outer surface in the tire radial direction of the inner cylinder of the ring member,
   in the non-pneumatic tire according to (1) or (2) above.
In one embodiment of the present disclosure, (4)
   the connecting member is arranged in a plurality, and
   the communication device is fixed on the outer surface of the inner cylinder in a non-connecting region between connecting regions where two adjacent connecting members are connected to the inner cylinder,
   in the non-pneumatic tire according to (3) above.
In one embodiment of the present disclosure, (5)
   the communication device is fixed on the surface of the wheel member or the inner cylinder of the ring member by welding of a resin covering member that covers a periphery of the communication device,
   in the non-pneumatic tire according to any one of (1) to (4) above.
In one embodiment of the present disclosure, (6)
   the communication device is an RF tag,
   in the non-pneumatic tire according to any one of (1) to (5) above.

### (Advantageous Effect)

According to the present disclosure, it is possible to provide a non-pneumatic tire capable of suppressing damage to a communication device during vehicle running.

### BRIEF DESCRIPTION OF THE DRAWINGS

In the accompanying drawings:
FIG. 1 is a side view of a non-pneumatic tire according to one embodiment of the present disclosure;
FIG. 2 is a diagram illustrating an enlarged portion of FIG. 1;
FIG. 3 is a cross-sectional view at the position of line I-I in FIG. 2;
FIG. 4 is a cross-sectional view at the position of line II-II in FIG. 1;
FIG. 5 is a diagram illustrating the communication device depicted in FIG. 1 and a reader/writer capable of wireless communication with the communication device;
FIG. 6 is a diagram illustrating an example of the communication device depicted in FIG. 1;
FIG. 7 is a perspective view illustrating a state in which the communication device depicted in FIG. 6 is covered by a covering member; and
FIG. 8 is a diagram illustrating a modification of the arrangement of the communication device depicted in FIG. 1.

Hereinafter, embodiments of the non-pneumatic tire according to the present disclosure will be illustratively described with reference to the drawings. In each figure, identical components are denoted by the same reference numerals. Hereinafter, the direction parallel to the tire central axis O of the non-pneumatic tire will be referred to as the "tire width direction A." Hereinafter, the direction around the tire central axis O of the non-pneumatic tire will be referred to as the "tire circumferential direction B." Hereinafter, in a cross-section orthogonal to the tire central axis O, the radial direction of a virtual circle centered on the tire central axis O will be referred to as the "tire radial direction C."

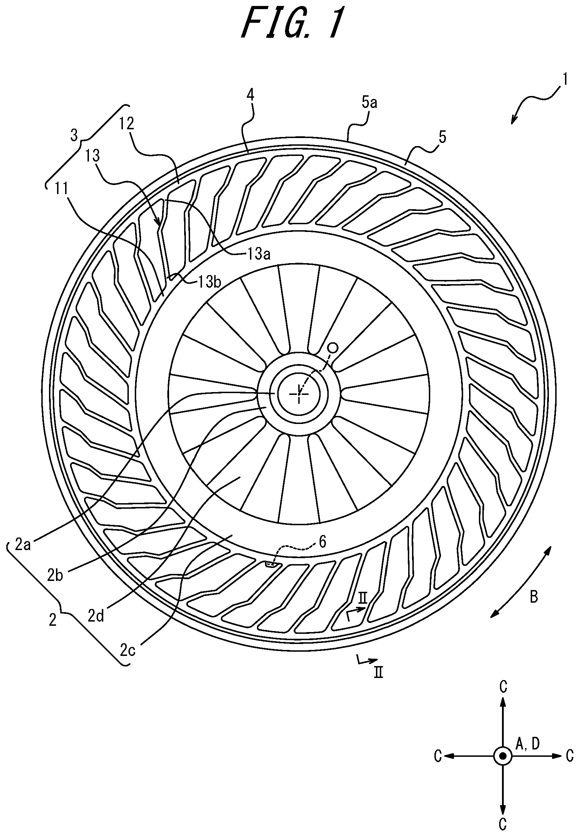

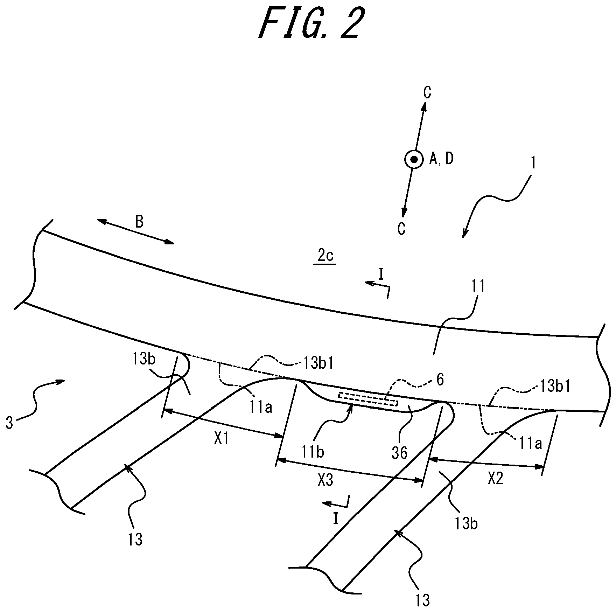

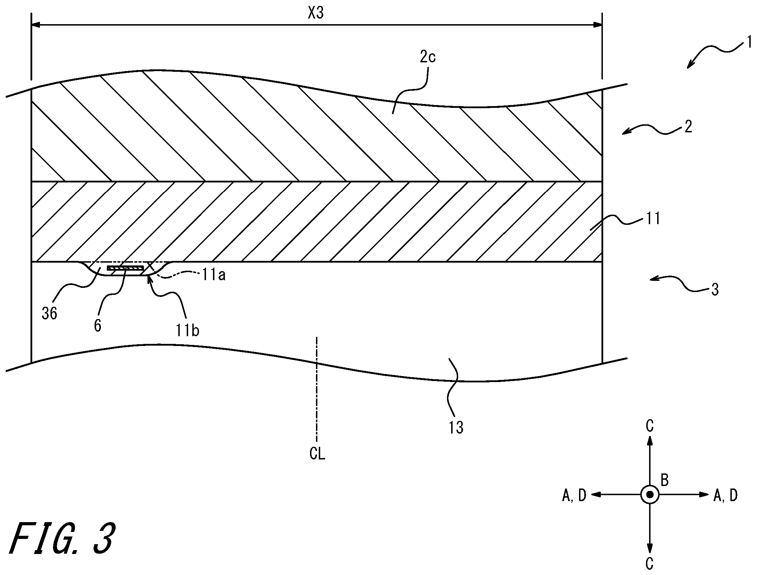

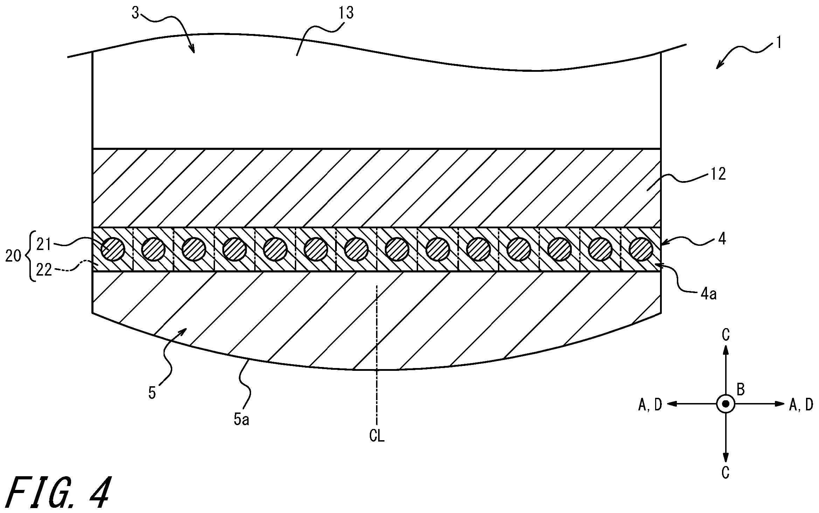

FIG. 1 is a side view of a non-pneumatic tire 1 as an embodiment of the non-pneumatic tire according to the present disclosure. FIG. 2 is an enlarged view of a portion of FIG. 1. FIG. 3 is a cross-sectional view taken along line I-I in FIG. 2. FIG. 4 is a cross-sectional view taken along line II-II in FIG. 1.

As illustrated in FIG. 1, the non-pneumatic tire 1 of the present embodiment includes a wheel member 2, a ring member 3, a spiral reinforcement layer 4, a tread member 5, and a communication device 6. The non-pneumatic tire 1 is used, for example, by being mounted on the axle of various vehicles such as bicycles, motorcycles, automobiles, and the like.

As illustrated in FIG. 1, the wheel member 2 is formed in a disk shape. Each of the ring member 3, the spiral reinforcement layer 4, and the tread member 5 is formed in an annular shape. The central axis of the wheel member 2, the central axis of the ring member 3, the central axis of the spiral reinforcement layer 4, and the central axis of the tread member 5 are positioned on a common axis. In the present embodiment, this common axis is the tire central axis O.

In the present embodiment, the central positions in the tire width direction A of the wheel member 2, the ring member 3, the spiral reinforcement layer 4, and the tread member 5 substantially coincide with each other. The wheel member 2, the ring member 3, the spiral reinforcement layer 4, and the tread member 5 of the present embodiment, as a whole, have a structure that is symmetrical in the tire width direction A with respect to the tire equatorial plane CL (see FIGS. 3 and 4) passing through the central position in the tire width direction A, but are not limited to this configuration.

The wheel member 2 is configured to be attachable to an axle. Specifically, the wheel member 2 of the present embodiment includes: a cylindrical boss 2a extending in the tire width direction A and into which the axle is fitted; a holding cylindrical portion 2b fixed to the outer circumferential surface of the boss 2a; a supporting cylindrical portion 2c that surrounds the outer side in the tire radial direction C of the holding cylindrical portion 2b and supports the ring member 3 on its outer circumferential surface; and a plurality of spokes 2d that connect the holding cylindrical portion 2b and the supporting cylindrical portion 2c.

The boss 2a, the holding cylindrical portion 2b, and the supporting cylindrical portion 2c are each arranged so that their central axes are positioned on the tire central axis O. The plurality of spokes 2d are arranged, for example, at equal intervals in the tire circumferential direction B. Each of the plurality of spokes 2d extends radially in the tire radial direction C with the boss 2a as the center.

The boss 2a, the holding cylindrical portion 2b, the supporting cylindrical portion 2c, and the plurality of spokes 2d may be made of metal such as an aluminum alloy, for example. Alternatively, the boss 2a, the holding cylindrical portion 2b, the supporting cylindrical portion 2c, and the plurality of spokes 2d may be made of resin such as a thermoplastic resin. Furthermore, some of the elements among the boss 2a, the holding cylindrical portion 2b, the supporting cylindrical portion 2c, and the plurality of spokes 2d may be made of metal, and the other elements may be made of resin. Thus, the material of the components of the wheel member 2 is not particularly limited.

The ring member 3 is mounted on the wheel member 2. More specifically, the ring member 3 of the present embodiment is externally fitted onto the supporting cylindrical portion 2c of the wheel member 2 and is supported on the outer circumferential surface of the supporting cylindrical portion 2c.

The ring member 3 includes an inner cylinder 11, an outer cylinder 12, and a connecting member 13.

The inner cylinder 11 is fixed to the wheel member 2. Specifically, the inner cylinder 11 of the present embodiment is externally fitted onto the supporting cylindrical portion 2c of the wheel member 2 and is supported by the outer circumferential surface of the supporting cylindrical portion 2c over the entire tire circumferential direction B. In this state, the inner cylinder 11 of the present embodiment is fixed to the supporting cylindrical portion 2c by being joined with fastening members such as bolts. The inner cylinder 11 is attached to the axle via the wheel member 2.

The outer cylinder 12 surrounds the outer side in the tire radial direction C of the inner cylinder 11. The central axis of the inner cylinder 11 and the central axis of the outer cylinder 12 are positioned on the tire central axis O. The inner cylinder 11 and the outer cylinder 12 of the present embodiment are arranged such that their respective central portions in the tire width direction A coincide with each other.

The connecting member 13 connects the inner cylinder 11 and the outer cylinder 12. The connecting member 13 is configured to be elastically deformable between the inner cylinder 11 and the outer cylinder 12. More specifically, the connecting member 13 is configured to be elastically deformable in the tire radial direction C between the inner cylinder 11 and the outer cylinder 12.

As illustrated in FIG. 1, the connecting member 13 of the present embodiment is arranged in a plurality in the tire circumferential direction B. More specifically, the connecting member 13 of the present embodiment is arranged in a plurality in the tire circumferential direction B at positions between the inner cylinder 11 and the outer cylinder 12 in the tire radial direction C. These plurality of connecting members 13 are arranged spaced apart from each other in the tire circumferential direction B. That is, two adjacent connecting members 13 in the tire circumferential direction B are arranged spaced apart from each other and are not in contact with each other. Further, the plurality of connecting members 13 of the present embodiment are arranged so as to be point-symmetrical with respect to the tire central axis O.

Further, the connecting member 13 of the present embodiment is a plate-shaped portion arranged such that its thickness direction is in the in-plane direction of a plane orthogonal to the tire central axis O. In the connecting member 13 of the present embodiment, the outer end portion 13a on the outer side in the tire radial direction C connected to the outer cylinder 12, and the inner end portion 13b on the inner side in the tire radial direction C connected to the inner cylinder 11, are arranged at different positions in the tire circumferential direction B. By doing so, the plate-shaped portion as the connecting member 13 can be used as a leaf spring that is easily elastically deformable in the tire radial direction C. However, the configuration of the connecting member 13 is not limited to that of the present embodiment.

The materials constituting the inner cylinder 11, the outer cylinder 12, and the connecting member 13 are not particularly limited. The inner cylinder 11, the outer cylinder 12, and the connecting member 13 may be made of metal, or may be made of resin. However, from the viewpoint of weight reduction, it is preferable that the inner cylinder 11, the outer cylinder 12, and the connecting member 13 are made of resin. As the resin material for the inner cylinder 11, the outer cylinder 12, and the connecting member 13, for example, thermoplastic resins such as polyester and nylon, thermosetting resins such as vinyl ester resin and unsaturated polyester resin, and other synthetic resins can be used. The resin material may further include, as reinforcement fibers, fibers such as glass, carbon, graphite, aramid, polyethylene, and ceramic.

In the present embodiment, the inner cylinder 11, the outer cylinder 12, and the connecting member 13 are integrally formed of a resin material by injection molding. As the injection molding, a method of integrally molding the entirety of the inner cylinder 11, the outer cylinder 12, and the connecting member 13 at the same time may be used. As the resin material, for example, a single type of resin material, a mixture containing two or more types of resin materials, or a mixture containing one or more types of resin materials and one or more types of elastomers may be used. Furthermore, for example, additives such as antioxidant, plasticizer, filler, or pigment may be included. The resin material is preferably a thermoplastic resin. Note that the inner cylinder 11, the outer cylinder 12, and the connecting member 13 may be formed separately and assembled together.

Note that the wheel member 2 has a function of connecting the axle and the ring member 3, and the ring member 3 has a function of absorbing vibrations transmitted from the ground to the axle. Thus, since the wheel member 2 and the ring member 3 have different functions, they may be formed of different materials. For example, the ring member 3 may be formed of a material having a relatively small elastic modulus to ensure vibration absorption performance, and the wheel member 2 may be formed of a material having a greater elastic modulus than the ring member 3 to ensure robustness.

The ring member 3 of the present embodiment is constituted by the above-described inner cylinder 11, outer cylinder 12, and connecting member 13, but is not limited to this configuration. The ring member 3 may further include other parts in addition to the inner cylinder 11, the outer cylinder 12, and the connecting member 13.

The spiral reinforcement layer 4 is formed by spirally winding a filament body 20, in which one cord 21 or a plurality of parallel cords 21 are embedded in a covering body 22, on the outer circumferential surface of the outer cylinder 12 of the ring member 3. In FIG. 4, as an example, a filament body 20 in which only one cord 21 is embedded in the covering body 22 is illustrated.

By spirally winding the filament body 20 on the outer circumferential surface of the outer cylinder 12, which serves as the outer circumferential surface of the ring member 3, the filament body 20 is adjacent in the tire width direction A on the outer circumferential surface of the outer cylinder 12. The portions of the covering body 22 of the portions of the filament body 20 that are adjacent in the tire width direction A are integrally bonded in the tire width direction A, thereby forming the spiral reinforcement layer 4 on the outer circumferential surface of the outer cylinder 12. The two-dot chain line in FIG. 4 indicates, for convenience of explanation, the boundary between the portions of the covering body 22 before they are bonded. In other words, the spiral reinforcement layer 4 includes a base layer 4a formed by bonding together the portions of the covering body 22 that are adjacent in the tire width direction A, and one or more cords 21 extending spirally within the base layer 4a. The covering body 22 may be made of, for example, a resin material. The covering body 22 may also be formed of a rubber composition, for example. As the cord 21, for example, a steel cord or the like can be used.

The spiral reinforcement layer 4 may be bonded to the outer circumferential surface of the outer cylinder 12 of the ring member 3 over the entire tire circumferential direction B. The bonding between the spiral reinforcement layer 4 and the outer cylinder 12 may be performed, for example, by welding the filament body 20 forming the spiral reinforcement layer 4 to the outer circumferential surface of the outer cylinder 12. When the covering body 22 is formed of a rubber composition, the bonding between the spiral reinforcement layer 4 and the outer cylinder 12 may be performed by vulcanization bonding.

In the non-pneumatic tire 1 of the present embodiment, since the spiral reinforcement layer 4 is provided, the rigidity of the outer cylinder 12 of the ring member 3 can be increased. As a result, for example, even when the non-pneumatic tire 1 is used in environments where it receives a large input of force from the road surface or where a projection on the road surface pierces the tread member 5 of the non-pneumatic tire 1, the durability of the non-pneumatic tire 1 can be improved.

The tread member 5 surrounds the outer side in the tire radial direction C of the spiral reinforcement layer 4. More specifically, the tread member 5 is formed in a cylindrical shape and covers the entire outer circumferential surface on the outer side in the tire radial direction C of the outer cylinder 12 of the ring member 3 from the outer side in the tire radial direction C of the spiral reinforcement layer 4. The elastic modulus of the material constituting the tread member 5 is smaller than the elastic modulus of the material constituting the ring member 3. The outer circumferential surface on the outer side in the tire radial direction C of the tread member 5 is the tread surface 5a of the non-pneumatic tire 1. As illustrated in FIG. 4, the tread surface 5a of the tread member 5 may be a curved surface that is convex toward the outer side in the tire radial direction C at the central side in the tire width direction A compared to the both end sides.

The tread member 5 is formed, for example, of a vulcanized rubber in which a rubber composition containing natural rubber or the like is vulcanized, a thermoplastic material or the like. Examples of the thermoplastic material include thermoplastic elastomers and thermoplastic resins. Examples of the thermoplastic elastomer include, for example, amide-based thermoplastic elastomer (TPA), ester-based thermoplastic elastomer (TPC), olefin-based thermoplastic elastomer (TPO), styrene-based thermoplastic elastomer (TPS), urethane-based thermoplastic elastomer (TPU), thermoplastic rubber vulcanizate (TPV), and other thermoplastic elastomers (TPZ) as defined in JIS K 6418. Examples of the thermoplastic resins include, for example, urethane resin, olefin resin, vinyl chloride resin, and polyamide resin. From the viewpoint of wear resistance, it is preferable to form the tread member 5 of vulcanized rubber.

As illustrated in FIGS. 1 to 3, the communication device 6 is fixed on a surface exposed to the outside of the ring member 3. More specifically, the communication device 6 is fixed on a surface exposed to the outside of the inner cylinder 11 of the ring member 3. Since the inner cylinder 11 is fixed to the wheel member 2, it is difficult for the inner cylinder 11 to deform in the tire radial direction C during vehicle running. Therefore, by fixing the communication device 6 on the surface of the inner cylinder 11, it is possible to suppress damage to the communication device 6 during vehicle running.

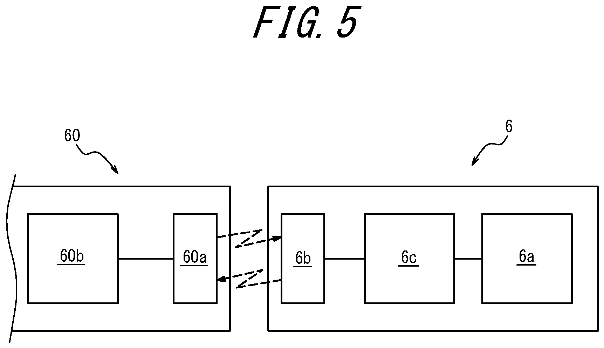

FIG. 5 is a diagram illustrating an RF tag as the communication device 6 of the present embodiment and a reader/writer 60 capable of wireless communication with this RF tag. As illustrated in FIG. 5, the communication device 6 of the present embodiment may be a passive RF tag including a storage unit 6a that stores information regarding the non-pneumatic tire 1, an antenna unit 6b capable of transmitting and receiving information with a reader/writer 60 located outside the non-pneumatic tire 1, and a controller 6c capable of writing information to and reading information from the storage unit 6a. Specifically, the RF tag as the communication device 6 of the present embodiment can receive, by the antenna unit 6b, information transmitted from the antenna unit 60a of the reader/writer 60 via radio waves or magnetic fields. By rectification (in the case of radio waves) or resonance (in the case of magnetic fields), power is generated in the antenna unit 6b, and the storage unit 6a and the controller 6c perform predetermined operations. For example, the controller 6c reads out information in the storage unit 6a and replies (transmits) it to the reader/writer 60 via the antenna unit 6b using radio waves or magnetic fields. The antenna unit 60a of the reader/writer 60 receives radio waves or magnetic fields from the RF tag as the communication device 6 of the present embodiment. The controller 60b of the reader/writer 60 can obtain the information stored in the storage unit 6a by extracting the received information. The above-described storage unit 6a and controller 6c can be constituted, for example, by an integrated circuit (IC chip) including a non-volatile memory.

The information stored in the storage unit 6a of the RF tag as the communication device 6 of the present embodiment is not particularly limited. The storage unit 6a may store, for example, unique identification information of the non-pneumatic tire 1, such as the manufacturer, manufacturing plant, manufacturing date, and the like of the non-pneumatic tire 1, which can identify each non-pneumatic tire individually. The storage unit 6a may also store, as information rewritable by the reader/writer 60, tire history information such as the running distance of the non-pneumatic tire 1, the number of sudden braking events, the number of roaring starts, the number of sudden sharp cornering situations, and the like. Furthermore, for example, a sensor for detecting tire acceleration or the like may be attached to the non-pneumatic tire 1, and the storage unit 6a may store detection information detected by the sensor. The RF tag as the communication device 6 can acquire detection information from the sensor by wirelessly communicating with the sensor via the antenna unit 6b.

Note that the communication device 6 only needs to be configured to be capable of wireless communication with a predetermined device outside the non-pneumatic tire 1, and is not limited to the RF tag of the present embodiment.

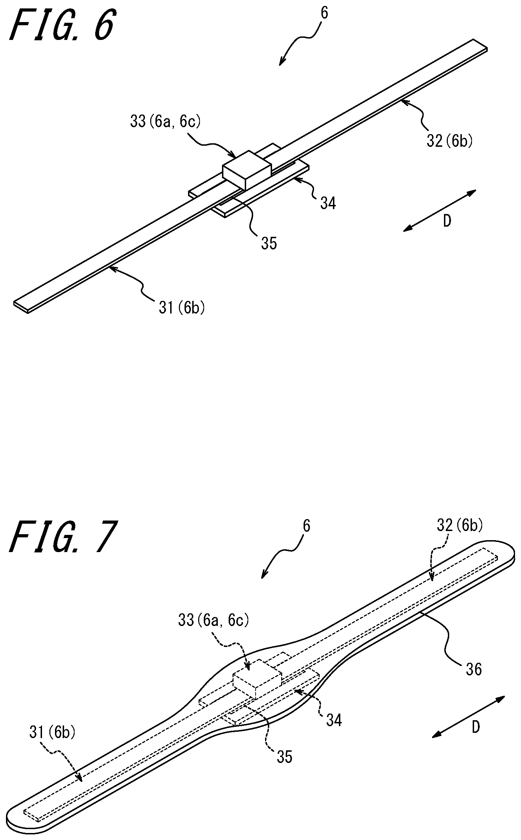

FIGS. 6 and 7 are perspective views illustrating the RF tag as the communication device 6 of the present embodiment. As illustrated in FIG. 6, the RF tag as the communication device 6 of the present embodiment includes: a first antenna 31 and a second antenna 32 constituting the antenna unit 6b; an IC chip 33 constituting the controller 6c and the storage unit 6a, which operates by the electromotive force induced by radio waves received by the first antenna 31 and the second antenna 32; a plate-shaped supporting member 34 to which the IC chip 33 is attached; and a conductive connecting member 35 that electrically connects the IC chip 33 to each of the first antenna 31 and the second antenna 32. As illustrated in FIG. 6, the RF tag as the communication device 6 of the present embodiment includes the elongated first antenna 31 and second antenna 32, which protrude in opposite directions from the IC chip 33 with the IC chip 33 interposed therebetween. In this way, the communication device 6 of the present embodiment has an elongated shape in which the longitudinal direction D of the first antenna 31 and the second antenna 32 is the longitudinal direction of the entire communication device 6. FIG. 7 is a perspective view illustrating a state in which the RF tag as the communication device 6 illustrated in FIG. 6 is covered with a covering member 36. The covering member 36 is formed of resin. In the present embodiment, as illustrated in FIG. 7, the RF tag as the communication device 6, in a state in which its periphery is covered by the covering member 36, is fixed on the surface of the inner cylinder 11. The communication device 6 of the present embodiment is fixed on the surface of the inner cylinder 11 by welding the covering member 36.

Hereinafter, with reference to FIGS. 2 and 3, details of the position and orientation at which the communication device 6 of the present embodiment is fixed on the surface of the inner cylinder 11 will be described.

As described above, the RF tag as the communication device 6 of the present embodiment has an elongated shape. As illustrated in FIGS. 2 and 3, the communication device 6 of the present embodiment is embedded in the inner cylinder 11 such that its longitudinal direction (which, in the present embodiment, is the same direction as the longitudinal direction D of the first antenna 31 and the second antenna 32, hereinafter referred to as the longitudinal direction D) is along the tire width direction A. The outer cylinder 12 of the non-pneumatic tire 1 is deformed in the tire radial direction C by forces received from the road surface during vehicle running. At this time, the variation in the amount of deformation in the tire radial direction C depending on the position in the tire circumferential direction B is greater than the variation in the amount of deformation in the tire radial direction C depending on the position in the tire width direction A. Since the inner cylinder 11 is supported on the outer circumferential surface of the supporting cylindrical portion 2c of the wheel member 2, it is less likely to deform in the tire radial direction C compared to the outer cylinder 12. However, the variation in the amount of deformation in the tire radial direction C of the outer cylinder 12 can also affect the inner cylinder 11, which is connected to the outer cylinder 12 via the connecting member 13. Specifically, due to the variation in the amount of deformation in the tire radial direction C of the outer cylinder 12, some variation may also occur in the amount of strain in the tire radial direction C of the inner cylinder 11. Therefore, the communication device 6 of elongated shape is fixed on the surface of the inner cylinder 11 such that its longitudinal direction D is along the tire width direction A. By doing so, as compared to a configuration in which the longitudinal direction D of the elongated communication device 6 is arranged along the tire circumferential direction B, it is possible to suppress the concentration of stress on a part of the longitudinal direction D of the communication device 6 fixed on the surface of the inner cylinder 11, based on the variation in the amount of strain of the inner cylinder 11 caused by the variation in the amount of deformation in the tire radial direction C of the outer cylinder 12, and thereby locally prevent deformation, damage, or breakage. That is, as compared to an arrangement in which the longitudinal direction D of the communication device 6 is along the tire circumferential direction B, the durability of the communication device 6 can be enhanced.

Note that, as used herein, "along the tire width direction A" is not limited to being parallel to the tire width direction A, but also includes cases where it is inclined at an angle of less than 45 degrees with respect to the tire width direction A. However, as in the present embodiment, it is preferable that the communication device 6 is arranged such that its longitudinal direction D is parallel to the tire width direction A or is inclined at an angle of 5 degrees or less with respect to the tire width direction A so as to be substantially parallel.

Further, as illustrated in FIGS. 2 and 3, the communication device 6 of the present embodiment is fixed on the outer surface on the tire radial direction C outer side of the inner cylinder 11. More specifically, the communication device 6 of the present embodiment is fixed on the outer surface of the inner cylinder 11 in a non-connecting region X3 between connecting regions X1 and X2 where two adjacent connecting members 13 are connected in the inner cylinder 11. Here, the "connecting region" refers to, when the inner cylinder 11 and the connecting member 13 in a connected state are separated into two by the virtual outer circumferential surface 11a of the inner cylinder 11 as a boundary, the region of the inner cylinder 11 that is covered in the tire radial direction C by the virtual end surface 13b1 of the inner end portion 13b of the connecting member 13. The "non-connecting region" refers to the region of the inner cylinder 11 that is not covered in the tire radial direction C by the virtual end surface 13b1 of the inner end portion 13b of the connecting member 13. The non-connecting region X3 of the inner cylinder 11 has a smaller amount of strain in the tire radial direction C during vehicle running compared to the connecting regions X1 and X2. Therefore, by fixing the communication device 6 on the outer surface of the inner cylinder 11 in the non-connecting region X3, deformation and damage of the communication device 6 due to strain in the tire radial direction C of the inner cylinder 11 can be suppressed.

In addition, in the non-pneumatic tire 1 of the present embodiment, a plurality of connecting members 13 are arranged in the tire circumferential direction B. The communication device 6 of the present embodiment is fixed on the outer surface of the inner cylinder 11 in the non-connecting region X3 between connecting regions X1 and X2 where two adjacent connecting members 13 are connected in the tire circumferential direction B. However, the connecting members 13 may also be arranged in plurality in the tire width direction A. In such a case, the communication device 6 may be fixed on the outer surface of the inner cylinder 11 in the non-connecting region X3 between connecting regions where two adjacent connecting members 13 in the tire width direction A are connected.

Note that the inner cylinder 11 of the present embodiment is made of resin, and the communication device 6 of the present embodiment is fixed on the outer surface of the inner cylinder 11 by welding a resin covering member 36 (see FIG. 7) that covers the periphery to the inner cylinder 11. By doing so, the communication device 6 can be firmly fixed to the inner cylinder 11. As a result, as illustrated in FIG. 2, the communication device 6 of the present embodiment is embedded in the protruding portion 11b that protrudes outward in the tire radial direction C from the virtual outer circumferential surface 11a of the inner cylinder 11. As illustrated in FIG. 3, the protruding portion 11b in which the communication device 6 is embedded is arranged offset to one side with respect to the tire equatorial plane CL in the tire width direction A. By doing so, as in the present embodiment, even if the position where the communication device 6 is arranged is a position sandwiched between two connecting members 13 in the tire circumferential direction B, the communication device 6 can be easily fixed on the outer surface of the inner cylinder 11 from the outside in the tire width direction A. Further, the communication device 6 may be arranged offset to one side in the tire width direction A, which becomes the outer side in the vehicle width direction when the non-pneumatic tire 1 is mounted on a vehicle. By doing so, even when the non-pneumatic tire 1 is mounted on a vehicle, it is easy to bring a reader/writer 60 (see FIG. 5) close to the communication device 6 from outside the non-pneumatic tire 1, and the communication performance between the communication device 6 and the reader/writer 60 can be improved.

As described above, the communication device 6 of the present embodiment is fixed on the outer surface on the tire radial direction C outer side of the inner cylinder 11, as an example of a surface exposed to the outside of the inner cylinder 11, in the non-connecting region X3 of the inner cylinder 11, but this configuration is not limited thereto.

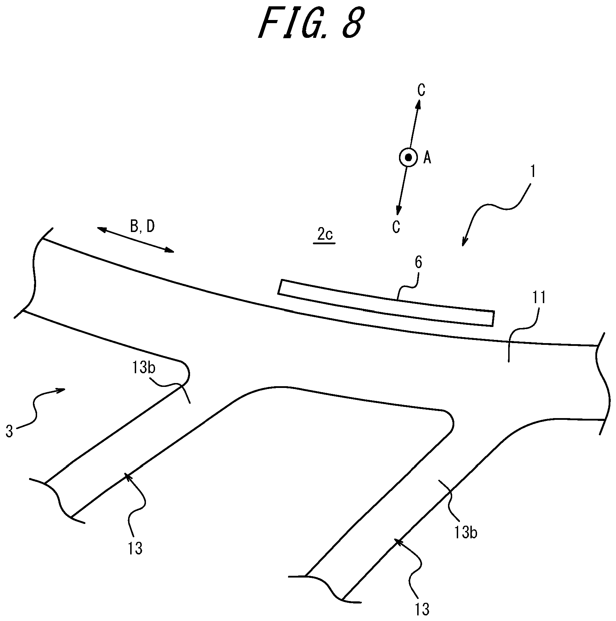

The communication device 6 may, for example, be fixed on the end surface in the tire width direction A of the inner cylinder 11 as an example of a surface exposed to the outside of the inner cylinder 11. Further, as illustrated in FIG. 8, the communication device 6 may be fixed on a surface exposed to the outside of the wheel member 2. FIG. 8 illustrates an example in which the communication device 6 is fixed on the end surface in the tire width direction A of the supporting cylindrical portion 2c of the wheel member 2. The communication device 6 may also be fixed, for example, to a part of the wheel member 2 other than the supporting cylindrical portion 2c, such as the spoke 2d of the wheel member 2. However, as in the present embodiment, it is preferable that the communication device 6 is fixed on the outer surface of the inner cylinder 11 in the non-connecting region X3 of the inner cylinder 11. By doing so, the communication device 6 is in a state surrounded by the inner cylinder 11, the outer cylinder 12, and the connecting member 13. Therefore, it is possible to suppress the communication device 6 from being damaged from outside the non-pneumatic tire 1. Such an arrangement is easily realized, as illustrated in FIG. 2, when the connecting member 13 is a plate-shaped portion used as a leaf spring and the communication device 6 has an elongated shape with a longitudinal direction D, by arranging the longitudinal direction D of the communication device 6 along the tire width direction A.

Further, the fixing of the communication device 6 to either the wheel member 2 or the inner cylinder 11 is not limited to the above-described welding of resins, and may, for example, be welding of metals. Furthermore, the fixing of the communication device 6 to either the wheel member 2 or the inner cylinder 11 may be by adhesion using an adhesive between resin and metal, between resins, or between metals. Thus, the method of fixing the communication device 6 to either the wheel member 2 or the inner cylinder 11 is not particularly limited.

The non-pneumatic tire according to the present disclosure is not limited to the specific configurations illustrated in the above-described embodiment and modifications, and various modifications, changes, and combinations are possible without departing from the scope of the claims.

### [Contribution to the Sustainable Development Goals (SDGs) led by the United Nations]

The SDGs have been advocated for the realization of a sustainable society. One embodiment of the present disclosure is considered to be a technology that can contribute to, for example, "No. 12: Responsible Consumption and Production" and "No. 13: Climate Action."

### INDUSTRIAL APPLICABILITY

The present disclosure relates to a non-pneumatic tire.

### REFERENCE SIGNS LIST

1: non-pneumatic tire
2: wheel member
2a: boss
2b: holding cylindrical portion
2c: supporting cylindrical portion
2d: spoke
3: ring member
4: spiral reinforcement layer
4a: base layer
5: tread member
5a: tread surface
6: communication device
6a: memory unit
6b: antenna unit
6c: controller
11: inner cylinder
11a: virtual outer circumferential surface of outer cylinder
11b: protruding portion
12: outer cylinder
13: connecting member
13a: outer end portion of connecting member
13b: inner end portion of connecting member
13b1: virtual end surface of inner end portion of connecting member
20: filament body
21: cord
22: covering body
31: first antenna
32: second antenna
33: IC chip
34: supporting member
35: conductive member
36: covering member
60: reader/writer
60a: antenna unit
60b: controller
A: tire width direction
B: tire circumferential direction
C: tire radial direction
D: longitudinal direction of communication device
CL: tire equatorial plane
O: tire central axis
X1, X2: connecting region
X3: non-connecting region

## Claims

1. A non-pneumatic tire comprising: a wheel member attachable to an axle;
a ring member mounted on the wheel member; and
a communication device,
wherein the ring member comprises:
an inner cylinder mounted on the wheel member;
an outer cylinder surrounding the inner cylinder on a tire radial direction outer side; and
a connecting member that connects the inner cylinder and the outer cylinder and is elastically deformable between the inner cylinder and the outer cylinder,
and wherein the communication device is fixed on a surface exposed to the outside of the wheel member or the inner cylinder of the ring member.

2. The non-pneumatic tire according to claim 1, wherein the communication device has an elongated shape, and wherein the communication device is fixed on the surface of the wheel member or the inner cylinder of the ring member such that a longitudinal direction thereof is along a tire width direction.

3. The non-pneumatic tire according to claim 1 or 2, wherein the communication device is fixed on an outer surface in the tire radial direction of the inner cylinder of the ring member.

4. The non-pneumatic tire according to claim 3, wherein the connecting member is arranged in a plurality, and wherein the communication device is fixed on the outer surface of the inner cylinder in a non-connecting region between connecting regions where two adjacent connecting members are connected to the inner cylinder.

5. The non-pneumatic tire according to claim 1 or 2, wherein the communication device is fixed on the surface of the wheel member or the inner cylinder of the ring member by welding of a resin covering member that covers a periphery of the communication device.

6. The non-pneumatic tire according to claim 1 or 2, wherein the communication device is an RF tag.
